# EUROPEAN PATENT APPLICATION

(11) **EP 4 213 064 A1**
(43) Date of publication of application: **19.07.2023**
(21) Application number: 22151744.4
(22) Date of filing: 17.01.2022
(51) Int. Cl.: G06K 7/10

(54) **RFID READER WITH CONTACTLESS COUPLED ANTENNA**

(71) Applicant: ELATEC GmbH, 82178 Puchheim (DE)
(72) Inventor: FINKENZELLER, Klaus, 85774 Unterföhring (DE); ZELENY, Matthias, 82291 Mammendorf (DE)
(74) Representative: Lohr, Jöstingmeier & Partner

(57) **Abstract**

A RFID Reader includes a coupler housing and an antenna housing. The coupler housing further comprises a RFID transceiver and a coupling loop coupled to the RFID transceiver. The antenna housing comprises a passive loop antenna. The passive loop antenna is in close proximity to the coupling loop such that the passive loop antenna is coupled electromagnetically to the coupling loop and therefore the RFID transceiver can use the passive loop antenna for communication to a RFID device.

## Description

### Field of the invention

The invention relates to RFID readers which may need a flexible positioning of the antenna with respect to an electronic housing or a connector. Such RFID readers may be used in printing systems and may be attached to a printer.

### Description of the related art

EP 3549052 discloses a RFID (Radio Frequency Identification) reader with rotatable connector. The connector is attached to a cable and therefore has only a limited rotation angle. Further, the connector cannot be displaced laterally with respect to the housing. JP 5227917B2 (corresponding to JP 2011-39694 A) discloses a handy type of RFID reader. The reader has a body with a USB cable connected thereto. This solution is more flexible but can easily be disconnected. Further a cable with connector is often not desired at the front panel of a device.

### Summary of the invention

The problem to be solved by the invention is to provide a RFID reader having a housing where a connector can be placed or moved to various positions relative to the housing and/or an antenna. Further the connector may be rotatable into any angle and/or displaceable. The solution should be simple, reliable, and inexpensive.

Solutions of the problem are described in the independent claims. The dependent claims relate to further improvements of the invention.

In an embodiment, a RFID Reader includes a RFID transceiver coupled to a coupling loop and a passive loop antenna (135). The passive loop antenna is in close proximity to the coupling loop such that the passive loop antenna is coupled electromagnetically to the coupling loop. The passive loop antenna may be configured to inductively couple with a RFID device e.g., a RFID transponder. Therefore, signals may be transmitted from the coupling loop to the RFID device and/or may be received by the coupling loop to the RFID device.

In an embodiment, a RFID reader includes within a coupler housing a RFID transceiver, which may be part of a RFID reader controller. The RFID reader further includes a coupling loop which is electrically coupled and/or connected to the RFID transceiver. The RFID reader further includes an antenna housing with a passive loop antenna. The antenna housing is arranged in close proximity to the coupler housing to allow coupling of RF signals between the coupling loop within the coupler housing and the passive loop antenna of the antenna housing. Therefore, the RFID transceiver may communicate via the passive loop antenna e.g., to a RFID device. The coupler housing and the antenna housing may also be part or sections of a common housing.

In an embodiment, the coupling loop is a loop antenna and RF signals between the coupling loop of the coupler housing and the passive loop antenna of the antenna housing are coupled electromagnetically and coupling may specifically be inductive. There may also be capacitive or electromagnetic coupling. The coupling loop may be arranged in a plane which is essentially parallel or parallel to a plane of the passive loop antenna. They may also be in the same plane. The coupling loop and/or the passive loop antenna may include at least one winding or a plurality of windings, which may be on a PCB (printed circuit board).

In an embodiment, the antenna housing including the passive loop antenna is configured to be displaced and/or moved against the coupler housing including the coupling loop. This allows independent adjustment of the position of an electrical connector connected to the RFID transceiver relative to the position of the passive loop antenna which defines an area where a RFID transponder may be read.

The coupling loop may be configured to couple energy from and to the passive loop antenna. The size of the coupling loop determines the impedance of the antenna system. It may be adapted such that the coupling loop has a predetermined impedance at the transceiver. The coupling loop may be smaller and/or have a smaller cross section than the passive loop antenna. It may be such small that it may be integrated into a connector like an USB connector or a compact housing of such a connector. The ratio R of the cross section of the passive loop antenna to the cross section of the coupling loop may be in one of the ranges of:
2:1 < R < 5:1,
2:1 < R < 10:1,
3:1 < R < 10:1,
5:1 < R < 10:1,
5:1 < R < 20:1, and
10:1 < R < 100:1.

The coupling loop may have a circular cross section with a diameter in a range of 5mm to 100mm. It may also have a rectangular cross section with the largest of a length and a width in the range of 5mm to 50mm and a cross section in the range of 20mm² to 2000mm². The coupling loop may have a distance D to the passive loop antenna in one of the ranges of:
0 mm < D < 3mm,
1 mm < D < 10mm,
1 mm < D < 30mm,
5 mm < D < 30mm,
1 mm < D < 50mm, and
10 mm < D < 50mm.

This distance may be the overall distance or the distance between parallel planes through the antennas.

There may be at least one means for constraining a movement between coupler housing and the antenna housing and/or between the coupling loop and the passive loop antenna. There may be at least one mechanical coupling between the coupler housing and the antenna housing. This may hold the coupling loop and the passive loop antenna in a spatial relationship which allows coupling of RF signals therebetween. Movement may be constrained to parallel planes of the antennas. Alternatively, the planes may be under an angle. Further movement may be constrained to any shape in 3D space.

The mechanical coupling may be a guidance slot in the coupler housing matching to a pin of the coupler housing to allow a displacement of a coupler housing relative to the antenna housing while still being kept at a predetermined distance. The guidance slot may also be in the coupler housing matching to a pin at the antenna housing. Basically, the guidance slot may have any shape which allows to move the coupler housing such that the magnetic fields of the coupling loop within the coupler housing is coupled to the passive loop antenna in the antenna housing. The guidance slot may have a linear shape, it may have an L-shape, a V- or U-shape. It may only be circular to allow only for rotation instead of rotation and linear displacement. Further, there may be a linear limit stop which only allows for linear movement without rotation. Instead of the guidance slot, a plurality of mounting points may be provided, such that the coupler housing may be positioned at various positions and/or angles with respect to the antenna housing. The pin may have any shape as long as it can be guided within the guidance slot. There may also be a plurality of mounting points in a plurality of predetermined positions.

In an embodiment, there may be a rotational or linear bearing between the coupler housing and the antenna housing.

In an embodiment, no mechanical coupling between the coupler housing and the antenna housing may be provided. There may be other means to ensure coupling like spatial constraints limiting the relative movement. Further, it may be a user's responsibility to keep the coupler housing and the antenna housing in a relationship for proper signal coupling. There may be marks at at least one of the housings indicating possible positions or ranges of positions.

The passive loop antenna may include conductor strips on a printed circuit board (PCB). It may include one, two, three or more turns. Within the loop may be at least one capacitor forming a resonance circuit. A typical loop resonance frequency may be 13,56 MHz. Typical dimensions of a passive loop antenna may be in a rectangular embodiment a height between 2 cm and 100 cm and a width between 2 cm and 100 cm.

The coupling loop in the coupler housing is coupled to a RFID transceiver, which may be a single chip, and which may further comprise additional active and/or passive components which may further be part of a RFID reader controller. It may be mounted on a printed circuit board which may also include the coupling loop. The coupling loop includes a wire loop which may be circumferential to the coupler housing. It may also include a capacitor which may be adjusted to maintain a specific resonance frequency of the coupling loop, although there are cases where this capacitor is not required. The RIFD transceiver may be coupled to a cable or a connector, e.g., a USB connector. It may also be configured to communicate via a wireless interface with other devices. Such wireless interfaces may include Bluetooth, Wi-Fi, or others.

In an embodiment, the projection of the coupling loop on the passive loop antenna is within the area of the passive loop antenna.

A RFID device like a RFID transponder may be placed in proximity to the passive loop antenna to communicate via the passive loop antenna and the coupling loop with the RFID transceiver.

The coupling loop and the passive loop antenna are reciprocal components which may allow coupling signals in any directions such as for transmitting and receiving signals.

The RFID reader may be configured for at least reading from and/or writing to at least one RFID device.

A RFID system includes a RFID reader as disclosed herein and at least one RFID device, e.g., a RFID transponder.

A method of communicating with at least one RFID device by a RFID transceiver may include the steps of:
electromagnetically coupling signals between the at least one RFID device and a passive loop antenna,
electromagnetically coupling the signals between the passive loop antenna and a coupling loop in the proximity of the passive loop antenna, and electrically coupling the coupling loop and the RFID transceiver.

The method may be performed by the RFID reader and/or the RFID system as disclosed herein.

### Description of Drawings

In the following the invention will be described by way of example, without limitation of the general inventive concept, on examples of embodiment with reference to the drawings.
Figure 1 shows a first embodiment
Figure 2 shows the coupler housing in a different position.
Figure 3 shows the coupler housing in a further position.
Figure 4 shows a coupler housing with a coaxial connector.
Figure 5 shows an embodiment with a modified guidance slot.
Figure 6 shows a schematic of an embodiment.
Figure 7 shows a schematic of a further embodiment.
Figure 8 shows a sectional side view of an embodiment.
Figure 9 shows a sectional side view of a further embodiment.

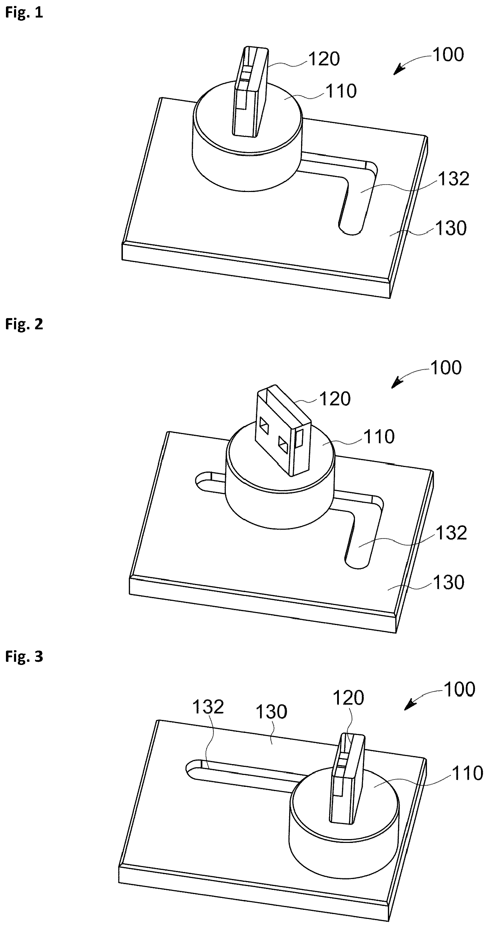

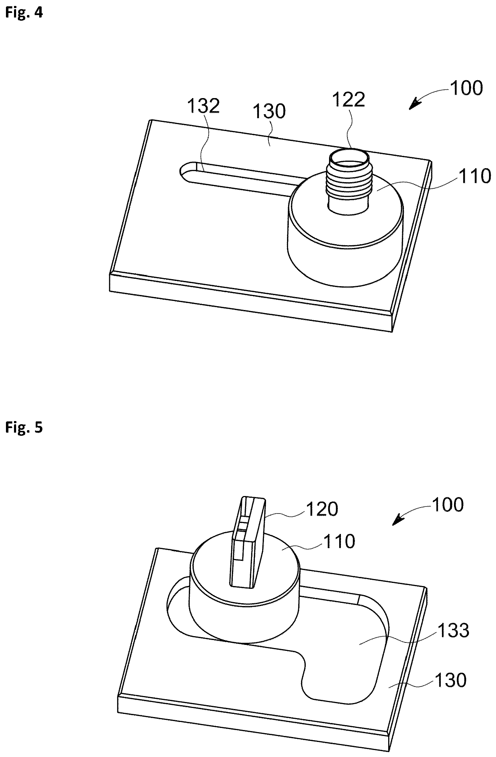

In figure 1 a first embodiment is shown. A RFID reader 100 may include a coupler housing 110 further including a coupling loop 115, and an antenna housing 130 further including a passive loop antenna 135. The coupler housing 110 may further include a connector 120 to connect a RFID transceiver 113 within the coupler housing 110. Both antennas are shown in figure 4. The antenna housing 130 may be movable relative to the coupler housing 110. There may be no mechanical connection between the coupler housing 110 and the antenna housing 130. To constrain the relative movement, a guidance means may be provided. Such a guidance means may be a hinge, a bearing, a guidance rail, or any other suitable means. The guidance means may be configured to constrain movement in a plane, such that the coupling loop and the passive loop antenna are aligned parallel. In this figure, a guidance slot 132 at the antenna housing is shown. There may be a guide pin 112, being guided in the guidance slot 132 as shown in figure 5. The guidance slot may have any suitable shape. It may be linear, curved, circular, F-shaped, or L-shaped as shown in this figure. Such an F-shape may allow movement around a corner.

Figure 2 shows the coupler housing 110 displaced parallel to a different position relative to the antenna housing 130. Further the coupler housing 110 is rotated.

Figure 3 shows the coupler housing 110 displaced parallel to a further position around the corner of the guidance slot 312 and relative to the antenna housing 130.

Figure 4 shows an embodiment of a coupler housing 110 with a coaxial connector 122. In this embodiment, only the coupling loop 115 may be in the coupler housing 110, while the RFID transceiver 113 may be in an external housing and may be connected via the coaxial connector 122.

Figure 5 shows an embodiment with a modified guidance slot 133. Here, the guidance slot 133 matches to the outer contour of the coupler housing 110, such that the guidance slot 133 can guide the coupler housing 110 directly without a guidance pin.

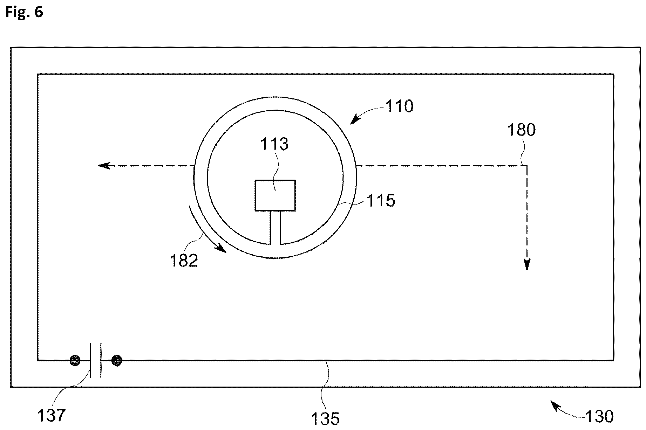

Figure 6 shows a schematic of an embodiment. The coupler housing 110 includes an RFID transceiver 113 connected to a coupling loop 115. The coupling loop 115 may be a loop antenna as shown. It may include at least one windings or multiple windings if needed. The coupling loop 115 may be arranged together with the RFID transceiver 113 on a transceiver PCB 114, whereas the coupling loop 115 may be close to the rim of the transceiver PCB 114.

The antenna housing 130 includes a passive loop antenna 135. The passive loop antenna may include one or more windings and it may be arranged on a passive antenna PCB 134. It may further include at least one capacitor 137 which may be connected in series to the antenna. The capacitor may be selected such that the passive loop antenna 135 resonates with the capacitor 137 at a frequency used by the RFID transceiver.

The coupler housing 110 may be moved relative to the antenna housing 130. Such movements are exemplary indicated by arrows for linear movement 180 and for rotation 182. The embodiment works best, when the projection of the coupling loop 115 on the passive loop antenna 135 is within the area of the passive loop antenna 135.

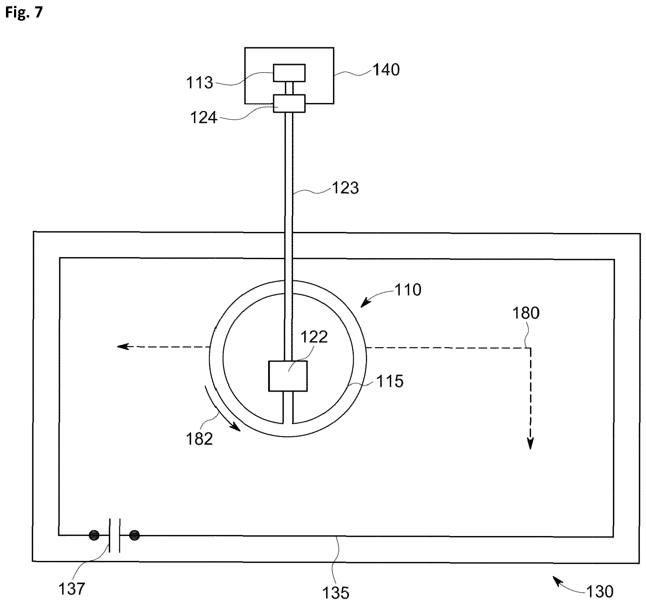

Figure 7 shows a schematic of a further embodiment. In this embodiment, only the coupling loop 115 may be in the coupler housing 110, while the RFID transceiver 113 may be part of an external communication unit 140. The coupling loop 115 may be connected to a RF connector 122, which may be a coaxial connector, a twinax connector or any other suitable connector. A RF cable 123 may connect the RF connector 122 to the RFID transceiver 113, e.g., via a RF connector 124.

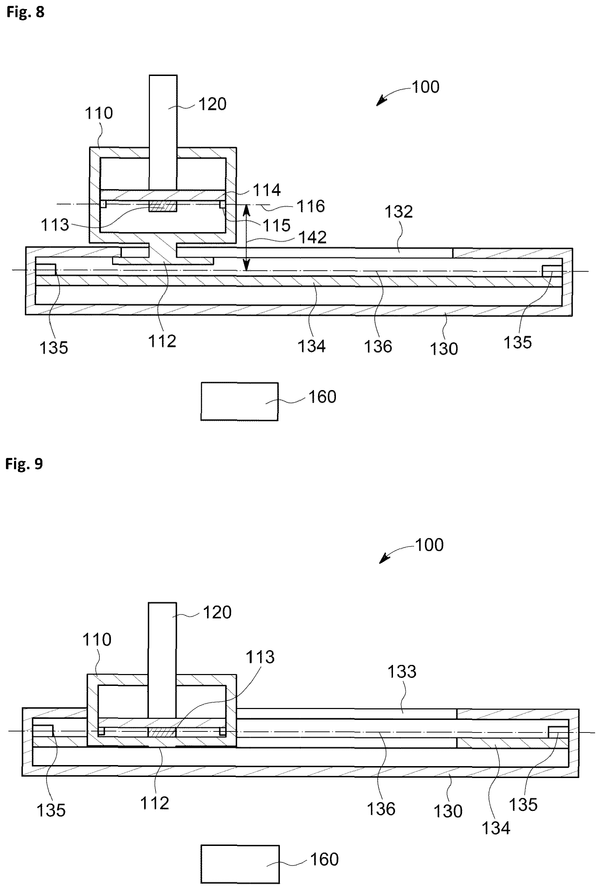

Figure 8 shows a sectional side view of an embodiment. The coupler housing 110 may include a transceiver PCB 114 which may further hold the RFID transceiver 113 and the coupling loop 115. The coupling loop 115 may be a copper trace on the transceiver PCB 114. It may also include a wire held by the transceiver PCB 114. The coupler housing 110 may further include a guidance pin 112 which may be configured to interact with a guidance slot 132 in the antenna housing 130 such that the relative movement between the coupler housing 110 and the antenna housing 130 is constrained. It may be constrained to a parallel movement such that the coupling loop 115 and the passive loop antenna 135 only may move in parallel planes. They may also be in the same plane. Further, the movement may be constrained such that the projection of the coupling loop 115 on the passive loop antenna 135 is within the area of the passive loop antenna 135.

The antenna housing 130 may include a passive antenna PCB 134 which may further hold the passive loop antenna 135. A RFID device like a RFID transponder may be placed in proximity to the passive loop antenna 135 to communicate via the passive loop antenna 135 and the coupling loop 115 with the RFID transceiver 113.

The coupling loop 115 may be on a plane 116 and/or the passive loop antenna 135 may be on a plane 136, whereas the planes have a distance 142. The PCBs may be planar, but there may also flexible PCBs bent to a 3-dimensional shape.

A RFID device 160, e.g., a RFID transponder may be in proximity to the passive loop antenna 135.

Figure 9 shows a sectional side view of a further embodiment. Here, as shown in figure 5, the guidance slot 133 matches to the outer contour of the coupler housing 110, such that the guidance slot 133 can guide the coupler housing 110 directly without a guidance pin. This may allow to have the coupling loop 115 and the passive loop antenna 135 in the same plane 136.

### List of reference numerals

- 100: RFID reader
- 110: coupler housing
- 112: guidance pin
- 113: RFID transceiver
- 114: transceiver PCB
- 115: coupling loop
- 116: plane of coupling loop
- 120: connector
- 122: RF connector
- 123: RF cable
- 124: RF connector at transceiver
- 130: antenna housing
- 132: guidance slot for guidance pin
- 133: guidance slot for coupler housing
- 134: passive antenna PCB
- 135: passive loop antenna
- 136: plane of passive loop antenna
- 137: capacitor
- 140: communication unit
- 142: distance between planes
- 160: RFID device
- 180: directions of movement
- 182: direction of rotation

## Claims

1. RFID Reader (100) comprising a RFID transceiver (113) coupled to a coupling loop (115), and a passive loop antenna (135),
wherein the passive loop antenna (135) is in close proximity to the coupling loop (115) such that the passive loop antenna (135) is coupled inductively to the coupling loop (115), wherein the coupling loop (115) is configured to inductively couple to a RFID device (160).

2. RFID Reader (100) according to claim 1,
**characterized in, that**
the passive loop antenna (135) is configured to be displaceable and/or movable relative to the active antenna (115).

3. RFID Reader (100) according any of the previous claims,
**characterized in, that**
the coupling loop (115) has a cross section which is smaller than the cross section of the passive loop antenna (135).

4. RFID Reader (100) according to the previous claim,
**characterized in, that**
the ratio R of the cross section of the passive loop antenna (135) to the cross section of the coupling loop (115) is in one of the ranges of 2:1 < R < 5:1, 2:1 < R < 10:1, 3:1 < R < 10:1, 5:1 < R < 10:1, 5:1 < R < 20:1 and 10:1 < R < 100:1.

5. RFID Reader (100) according to the previous claim,
**characterized in, that**
the distance D between the coupling loop (115) and the passive loop antenna (135) is in one of the ranges of
0 mm < D < 3mm,1 mm < D < 10mm, 1 mm < D < 30mm, 5 mm < D < 30mm, 1 mm < D < 50mm, and 10 mm < D < 50mm.

6. RFID Reader (100) according to any of the previous claims,
**characterized in, that**
the coupling loop (115) is a loop antenna.

7. RFID Reader (100) according to any of the previous claims,
**characterized in, that**
the projection of the coupling loop (115) on the passive loop antenna (135) is within the area of the passive loop antenna (135).

8. RFID Reader (100) according to any of the previous claims,
**characterized in, that**
a coupler housing (110) includes the coupling loop (115) and may further include the RFID transceiver (113).

9. RFID Reader (100) according to any of the previous claims,
**characterized in, that**
an antenna housing (130) includes the passive loop antenna (135).

10. RFID Reader (100) according to any of the previous claims,
**characterized in, that**
at least one means for constraining a movement between coupler housing (110) and the antenna housing (130) and/or between the coupling loop (115) and the passive loop antenna (135) is provided.

11. RFID Reader (100) according to any of the previous claims,
**characterized in, that**
at least one mechanical coupling (112, 132) between coupler housing (110) and the antenna housing (130) and/or between the coupling loop (115) and the passive loop antenna (135) is provided is provided.

12. RFID Reader (100) according to the previous claim,
**characterized in, that**
the at least one mechanical coupling (112, 132) includes a guidance slot (132) which may be in the antenna housing (130) or the passive loop antenna (135) and includes a guidance pin (112) matching to the guidance slot (132), which may be at the coupler housing (110) or the coupling loop (115).

13. RFID system comprising a RFID reader (100) according to any of the previous claims and at least one RFID device (160), e.g., a RFID transponder.

14. Method of communicating with at least one RFID device (160) by a RFID transceiver (113) including the steps of:
electromagnetically coupling signals between the at least one RFID device (160) and a passive loop antenna (135),
electromagnetically coupling the signals between the passive loop antenna (135) and a coupling loop (115) in the proximity of the passive loop antenna (135), and
electrically coupling the coupling loop (115) and the RFID transceiver (113).
